# EUROPÄISCHE PATENTSCHRIFT

(11) **EP 2 093 267 B1**
(45) Veröffentlichungstag und Bekanntmachung des Hinweises auf die Patenterteilung: **07.12.2011**
(21) Anmeldenummer: 09001000.0
(22) Anmeldetag: 25.01.2009
(51) Int. Cl.: C09D 193/00, C09D 193/02, C09D 193/04

(54) **Herstellungsverfahren für einen Lack sowie Lack**
Method for producing a varnish and varnish
Procédé de fabrication d'une laque et laque

(30) Priorität: 25.02.2008 DE 102008010852
(43) Veröffentlichungstag der Anmeldung: 26.08.2009
(73) Patentinhaber: Actega Terra GmbH, 31275 Lehrte (DE)
(72) Erfinder: Kamphuis Frank, 31525 Neustadt a Rbge/Poggenhagen (DE); Melzer Uta, 30916 Iserhagen HB (DE)
(74) Vertreter: Säger, Manfred

(56) Entgegenhaltungen:
- EP-A1- 0 946 647
- EP-A2- 0 069 936
- EP-A2- 0 652 270
- EP-A2- 0 773 233
- WO-A-99/61538
- WO-A1-95/02339
- WO-A1-99/06488
- CA-A1- 2 130 518
- US-A- 4 013 479
- US-A- 4 648 905
- US-A- 5 158 609

## Beschreibung

Die Erfindung betrifft ein gattungsgemässes Herstellungsverfahren für einen Lack nach dem Oberbegriff des Hauptanspruchs sowie einen danach hergestellten Lack.

Solche Verfahren sowie danach hergestellte Lacke sind bekannt und haben sich bewährt. Sie werden als Glanzlack oder Mattlack mit unterschiedlichen Matt-/Glanzstufen aus Lackieraggregaten mit und ohne Kammerrakelsystem im Inline- sowie Offlineverfahren appliziert, was mittels Druckmaschinen durch indirekte und direkte Auftragsverfahren - vollflächig oder partiell- auf Substrate erfolgen kann, die gestrichene, gussgestrichene und ungestrichene Papier- und Kartonoberflächen sowie Aluminiumfolien, metallisierte Substrate, Kunststoff- sowie Folien aus nachwachsenden Rohstoffen sowie Schichtverbunde aus unterschiedlichen Materialeien und Substraten sein können.

Als Druckmaschinen kommen Offsetmaschinen mit integrierten Lackieraggregaten in Frage. Ebenso geeignet sind Rollenoffset-, Flexo-, Tiefdruck- und Lackiermaschinen. Es können unbedruckte oder bedruckte Oberflächen lackiert werden. Als Druckfarben finden Verwendung Flexo-, Offset- oder Tiefdruckfarben. Für Offsetdruckfarben gilt dies für oxidativ trocknende, wegschlagend trocknende, oxidativ und wegschlagend trocknende, UV-härtende und UV-härtende Hybrid-Offsetdruckfarben. Für den Flexo- und Tiefdruck sind die Druckfarben lösungsmittel- oder wasserbasierend. Solche Druckfarben sind zum Beispiel in der DE 103 60 050 B3 bekannt.

Allerdings basieren diese bekannten gattungsgemässen Lacke auf synthetischen Rohstoffen aus fossilen Quellen, die aber, als nicht nachwachsend, nur begrenzt zur Verfügung stehen.

Der Erfindung liegt daher die Aufgabe zugrunde ein Herstellungsverfahren sowie einen danach hergestellten, die natürlichen Ressourcen schonenden Lack vorzuschlagen.

Diese Aufgabe wird bei einem gattungsgemässen Verfahren nach dem Oberbegriff des Verfahrenshauptanspruchs sowie einem Lack nach dem Sachhauptanspruch erfindungsgemäss durch deren jeweilige kennzeichnenden Merkmale gelöst.

Erfindungsgemäss stammen nach Lehre der Erfindung also alle bezüglich ihrer Menge wesentlichen Bestandteile des Lackes aus nachwachsenden bzw. sich erneuernden natürlichen Quellen.

Als Naturharze können modifizierte Kolophoniumharze und Schellackharze verwendet werden. In der Lackformulierung werden die Naturharze bevorzugt als Festharze, aber auch als Harzlösung eingesetzt.

Harzlösungen (mit einem Harzgehalt von 20 bis 50 Gew.%) erhält man durch Einbringen des Festharzes in Wasser und anschliessender Zugabe eines geeigneten Neutralisationmittels (z.B. Ammoniak, Amine oder Alkalihydroxide) unter Rühren. Der pH-Wert der Harzlösungen sollte zwischen 8 und 10 liegen. Die Kolophoniumharze werden aus dem Baumsaft verschiedener Nadelhölzer gewonnen, deren nichtflüchtiger Hauptbestandteil die Abietinsäure ist, die natürlich auch anstelle dessen verwendet werden kann. Vorzugsweise werden aber maleinsäuremodifizierte und/oder fumarsäuremodifizierte Kolophoniumharzen eingesetzt.

Der Schmelzpunkt der Festharze liegt dabei etwa zwischen 80 °C und 250 °C, vorzugsweise 90 °C bis 200 °C und vorteilhafterweise zwischen 110 °C und 180 °C. Die Säurezahl [mg KOH / g Festharz] beträgt 70 bis 380, vorzugsweise 100 bis 280 und vorteilhafterweise zwischen 130 und 230.

Die Harze sind nach der Neutralisation mit Neutralisationsmittel, wie z.B. Ammoniak / Aminen bzw. Alkalihydroxiden (NaOH, KOH) wasserlöslich und werden ohne Zusatz weiterer Lösemittel (z.B. Ethanol) in Wasser gelöst.

Bei Einsatz von Schellack (Schellack ist ein Ausscheidungsprodukt der Lackschildlaus) geht man von entwachstem oder wachshaltigem ungebleichten Schellack bzw. entwachstem, gebleichten Schellack in Festform oder in wässriger alkalischer Lösung aus (Schmelzpunkte der verschiedenen Schellacktypen: 60 bis 90 °C; Säurezahl: 60 bis 100, vorzugsweise 65 bis 95 [mg KOH / g Schellack]; die wässrigen alkalischen Schellacklösungen besitzen einen Feststoffgehalt von 5 bis 40 %, vorzugsweise zwischen 10 bis 20%).

Als Schellack-Copolymer-Dispersion dient eine wässrige Dispersion auf Basis von Schellackharz, welches mit Ethylenderivaten polymerisiert ist. Als Ethylenderivate können folgende Monomere allein oder als Mischungen verwendet werden: Acrylsäure, Methacrylsäure, Acrylsäureester, Methacrylsäureester, Styrol, Butadien und Maleinsäureanhydrid. Der Festkörpergehalt der Schellack-Copolymer-Dispersion beträgt zwischen 5 und 60 %, vorzugsweise 30 und 50 %, wobei der Schellackanteil bezogen auf Dispersion 5 bis 60 %, vorzugsweise 20 bis 40 % beträgt. Das durchschnittliche Molekulargewicht der Dispersion liegt zwischen 20.000 bis über 200.000, die Glasübergangslemperatur (= Tg) zwischen -20 °C bis über 120°C und die Säurezahl zwischen 10 - 20 [mg KOH / g Festsubstanz].

Statt dessen oder in Kombination damit sind auch wässrige Dispersionen auf Basis von Stärke (native Stärke aus verschiedenen Stärkequellen sowie auch modifizierte Stärken), die mit Ethylenderivaten polymerisiert sind, nach Lehre der Erfindung einsetzbar. Als Ethylenderivate können folgende Monomere allein oder als Mischungen verwendet werden: Acrylsäure, Methacrylsäure, Acrylsäureester, Methacrylsäureester, Styrol, Butadien und Maleinsäureanhydrid. Der Festkörpergehalt der Dispersion beträgt 20 bis 60 %, vorzugsweise 30 bis 50 %, das Molekulargewicht der Dispersion: ca. 20.000 bis über 200.000 g/mol, die Glasübergangstemperatur (= Tg) der Dispersion ca. -20°C bis > 120°C und die Säurezahl der Dispersion 10 bis 200 [mg KOH / g Festsubstanz].

Auch statt dessen oder in Kombination damit verwendbar sind wässrige Dispersionen auf Basis von Polymilchsäure, die mit Ethylenderivaten polymerisiert sein können, einsetzbar. Als Ethylenderivate können folgende Monomere allein oder als Mischungen verwendet werden: Acrylsäure, Methacrylsäure, Acrylsäureester, Methacrylsäureester, Styrol, Butadien und Maleinsäureanhydrid. Der Feststoffgehalt der Dispersion liegt bei 5 bis 60 Gew.%, vorzugsweise 30 bis 50 Gew.%, das Molekulargewicht der Dispersion bei ca. 20.000 bis über 200.000 g/mol, die Glasübergangstemperatur (= Tg) der Dispersion bei ca. -20 °C bis > 120 °C und die Säurezahl der Dispersion bei 10 bis 200 [mg KOH / g Festsubstanz].

Wachse bei dem erfindungsgemässen Lack basieren vorzugsweise auf tierischen Bienenwachsen und/oder pflanzliche Carnaubawachs (Carnaubawachs wird aus den Blättern der Carnaubapalme gewonnen) und/oder Candelillawachs (Candelillawachs wird aus den Blättern einer Wolfsmilchart gewonnen). Es ist der Einsatz im Lack als Festwachs, Mikrodispersion oder Wachsemulsion bevorzugt. Die Schmelzpunkte der Festwachse liegen bei 70 bis 100 °C (Carnaubawachs), 60 bis 80 °C (Candellilawachs) und 50 bis 70 [deg.]C (Bienenwachs). Die Teilchengrösse beträgt in Wachsemulsionen 0,01 bis 0,5 µm, in Mikrodispersionen 0,5 bis 4 µm und im Festwachs zwischen 1 bis 15 µm. Wässrige Wachsemulsionen weisen einen Feststoffgehalt von 10 bis 50 Gew.% auf, wobei ein nichtionische Emulgatorsysteme (z.B. Fettsäureester oder Sorbitanester) bevorzugt sind.

Wenn der Lack als Mattlack ausgebildet ist, so können Stearate als Mattierungsmittel auf Basis nachwachsender Rohstoffe Einsatz finden. Stearate werden durch Verseifung (Fettspaltung) von pflanzlichen und tierischen Fetten gewonnen, wobei Alkali- (Li, Na, K) und / oder Erdalkali- (Mg, Ca, Ba) und/oder Zinkstearate mit einer Einsatzmenge von 0,01 Gew.% bis 15 Gew.% und einer durchschnittlichen Teilchengrösse von 1 bis 15 µm eingesetzt werden.

Weitere zweckmässige Ausgestaltungen und Weiterbildungen der Erfindung sind in den restlichen Unteransprüchen gekennzeichnet.

Ein Beispiel der Herstellung des Lackes ergibt sich aus dem nachfolgenden Beispiel:

Die Herstellung aus Festharz bzw. Harzlösung: In einem Mischkessel, der mit einem Dispergierwerk ausgestattet ist, werden Wasser, Festharz, Entschäumer und Neutralisationsmittel (z. B. Ammoniak) vorgelegt und gerührt. Der Anfangs pH-Wert sollte dabei nicht unter 9 liegen und während der exothermen Reaktion durch entsprechende Nachdosierung des Neutralisationsmittels zwischen pH 8 und 10 gehalten werden. Die Temperatur wird zwischen 20 °C und 80 °C, optimal zwischen 30 °C und 60 °C eingestellt. Nach etwa 1 bis 6 h Rühren hat sich das Festharz fast vollständig aufgelöst. Die so aus Festharz hergestellte Harzlösung kann nun direkt weiterverarbeitet werden. Dazu werden Dispersion, Netzmittel, Wachs, Lösemittel, Verlaufsmittel sowie bei Mattlacken zusätzlich Mattierungsmittel unter Rühren hinzugegeben und für etwa 1 bis 6 h gerührt. Durch weitere Zugabe von Wasser lässt sich die gewünschte Viskosität des Lackes einstellen.

Bei der Herstellung eines Lackes aus Harzlösung wird die oben beschriebene Harzlösung aus dem Mischkessel in ein Lagergefäss überführt und zu einem späteren Zeitpunkt zu einem Lack, wie voran stehend beschrieben, weiterverarbeitet.

Folgende Beispielsrezepturen des erfindungsgemässen Lacks sind möglich:

| | Vgl.Bsp.1 | Bsp.1 | Vgl.Bsp.2 |
|---|---|---|---|
| Wasser | 50 | 50,8 | 17,8 |
| Festharz | 28 | 20 | 0 |
| Ammoniaklsg. (25%ig) | 7 | 5 | 0 |
| Dispersion | 0 | 15 | 65 |
| Netzmittel | 4 | 4 | 5 |
| Wachs | 10 | 5 | 10 |
| Entschäumer | 0,2 | 0,2 | 0,2 |
| Verlaufsmittel | 0,8 | 0 | 2 |

## Patentansprüche

1. Herstellungsverfahren für einen Lack, aufweisend ein Harz auf Basis von modifiziertem Kollophonium oder Schellack und einer wässrigen Dispersion eines Schellack-Copolymers und/oder einer wässrigen Dispersion auf Basis von Polymilchsäure und/oder einer wässrigen Dispersion auf Basis von Cellulose sowie ggf. Netzmittel, Entschäumer, Wachs, Lösemittel Verlaufsmittel und Mattierungsmittel, wobei einem Feststoffharz oder einer Lösung von Harz die wässrige Dispersion und ggf. Netzmittel, Entschäumer, Wachs, Lösemittel, Verlaufsmittel sowie ggf. bei Mattlacken zusätzlich Mattierungsmittel unter Rühren hinzugegeben und für etwa 1 bis 6 h, ggf. unter weiterer Zugabe von Wasser zwecks Einstellung der gewünschten Viskosität des Lackes weiter gerührt werden, **dadurch gekennzeichnet, dass** zur Herstellung der Lösung des Harzes Wasser, Festharz oder Harzlösung, Entschäumer und Neutralisationsmittel vorgelegt und während eines exothermen Lösungsprozesses des Harzes zugegeben werden, so dass der pH-Wert dabei zu Anfang nicht unter pH 9 liegt und der pH-Wert während des Rührens durch entsprechende Nachdosierung des Neutralisationsmittels zwischen pH 8 und 10 gehalten wird.

2. Herstellungsverfahren nach Anspruch 1, **dadurch gekennzeichnet, dass** die Temperatur zwischen 20°C und 80°C gehalten wird.

3. Lack, aufweisend Harz auf Basis von modifiziertem Kollophonium oder Schellack und einer wässrigen Dispersion eines Schellack-Copolymers und/oder einer wässrigen Dispersion auf Basis von Polymilchsäure und/oder einer wässrigen Dispersion auf Basis von Cellulose sowie ggf. Netzmittel, Entschäumer, Wachs, Lösemittel, Verlaufsmittel und Mattierungsmittel, **dadurch gekennzeichnet, dass** das Harz und
die Dispersion zusammen mehr als 25 Gew.% ausmachen und dass der Lack neben den vorstehenden zusätzlichen Zusatzstoffen Wasser aufweist.

4. Lack nach Anspruch 3, **dadurch gekennzeichnet, dass** das modifizierte Kolophoniumharz und/oder der Schellack in einer Menge von kleiner 50 Gew.% vorliegt.

5. Lack nach Anspruch 4, **dadurch gekennzeichnet, dass** das modifizierte Kolophoniumharz und/oder der Schellack ein Festharz ist.

6. Lack nach Anspruch 5, **dadurch gekennzeichnet, dass** das Festharz ein Molekulargewicht zwischen 800 und 20.000 aufweist.

7. Lack nach Anspruch 3, **dadurch gekennzeichnet, dass** die Dispersion in einer Menge von kleiner 95 Gew.% vorliegt.

8. Lack nach Anspruch 3, **dadurch gekennzeichnet, dass** als Wachs zumindest ein natürliches Wachs in einer Menge von 1 bis 25 Gew.% vorliegt.

9. Lack nach Anspruch 8, **dadurch gekennzeichnet, dass** als natürliches Wachs Carnaubawachs und/oder Bienenwachs und/oder Candelillawachs verwendet wird.

10. Lack nach Anspruch 3, **dadurch gekennzeichnet, dass** das Netzmittel, basierend auf Alkylpolyglycosiden und/oder modifizierten Sojalecithinen in einer Menge von 1 bis 15 Gew.% vorliegt.

11. Lack nach Anspruch 3, **dadurch gekennzeichnet, dass** der Lack als Entschäumer native Öle und/oder Fettsäureester aufweist.

12. Lack nach Anspruch 3, **dadurch gekennzeichnet, dass** der Lack als Verlaufsmittel natürlich basierende Glycole und/oder Alkohole in einer Menge von kleiner 20 Gew.% aufweist.

13. Lack nach Anspruch 3, **dadurch gekennzeichnet, dass** der Lack ein Glanzlack ist.

14. Lack nach Anspruch 3, **dadurch gekennzeichnet, dass** der Lack Mattierungsmittel aufweist.

15. Lack nach Anspruch 14, **dadurch gekennzeichnet, dass** der Lack als Mattierungsmittel Stearate auf Basis nachwachsender Rohstoffe und/oder Wachspräparationen auf der Basis von Amidwachsen aufweist.

## Claims

1. A manufacturing method for a varnish, comprising a resin based on modified colophonium resin or shellac and an aqueous dispersion of a shellac copolymer and/or an aqueous dispersion based on polylactic acid and/or an aqueous dispersion based on cellulose and optionally wetting agents, de-foamers, wax, solvents, flow-control agents and flatting agents, wherein the aqueous dispersion and optionally wetting agents, de-foamers, wax, solvents, flow-control agents and, optionally, additional flatting agents in the case of matt varnishes, are added to a solid resin or a solution of resin and further stirred for approximately 1 to 6 hours, optionally with a further addition of water for the purpose of adjusting the required viscosity of the varnish,
**characterised in that**,
in order to manufacture the solution of the resin, water, solid resin or resin solution, de-foamer and neutralising agents are prepared and added during an exothermic dissolving process of the resin, so that the pH value at the start is not below pH 9, and the pH value during the stirring is held between pH 8 and 10 through a corresponding additional dosage of the neutralising agent.

2. The manufacturing method according to claim 1, **characterised in that**,
the temperature is kept between 20°C and 80°C.

3. A varnish, containing resin based on modified colophonium or shellac and an aqueous dispersion of a shellac copolymer and/or an aqueous dispersion based on polylactic acid and/or an aqueous dispersion based on cellulose and optionally wetting agents, de-foamer, wax, solvents, flow control agents and flatting agents, **characterised in that**,
the resin and the dispersion together make up more than 25% by weight, and that the varnish contains water as well as the above-mentioned additional additives.

4. The varnish according to claim 3, **characterised in that**,
the modified colophonium resin and/or the shellac is present in a quantity of less than 50% by weight.

5. The varnish according to claim 4, **characterised in that**,
the modified colophonium resin and/or the shellac is a solid resin.

6. The varnish according to claim 5, **characterised in that**,
the solid resin has a molecular weight between 800 and 20,000.

7. The varnish according to claim 3, **characterised in that**,
the dispersion is present in a quantity of less than 95% by weight.

8. The varnish according to claim 3, **characterised in that**,
at least one natural wax in a quantity of 1 to 25% by weight is present as a wax.

9. The varnish according to claim 8, **characterised in that**,
carnauba wax and/or beeswax and/or candelilla wax is used as a natural wax.

10. The varnish according to claim 3, **characterised in that**,
the wetting agent based on alkylpolyglycosides and/or modified soya lecithins is present in a quantity from 1 to 15% by weight.

11. The varnish according to claim 3, **characterised in that**,
the varnish provides virgin oils and/or fatty acid esters as de-foamers.

12. The varnish according to claim 3, **characterised in that**,
the varnish provides naturally based glycols and/or alcohols as flow-control agents in a quantity of less than 20% by weight.

13. The varnish according to claim 3, **characterised in that**,
the varnish is a gloss varnish.

14. The varnish according to claim 3, **characterised in that**,
the varnish provides flatting agents.

15. The varnish according to claim 14, **characterised in that**,
the varnish provides stearates based on renewable raw materials and/or wax preparations based on amide waxes as flatting agents.

## Revendications

1. Procédé de fabrication d'un vernis, comportant une résine à base de collophonium modifié ou une gomme-laque et une dispersion aqueuse d'un copolymère à base de gomme-laque et/ou une dispersion aqueuse à base d'acide polylactique et/ou une dispersion aqueuse à base de cellulose, ainsi que, le cas échéant, des agents mouillants, des agents antimoussants, de la cire, des solvants, des agents d'écoulement et des agents de matage, dans ledit vernis la dispersion aqueuse et, le cas échéant, les agents mouillants, les agents antimoussants, la cire, les solvants, les agents d'écoulement, ainsi que, le cas échéant, dans les vernis mats, les agents de matage sont ajoutés moyennant un brassage à une résine solide ou une solution de résine, et le mélange continue à être brassé pendant environ 1 à 6 h, le cas échéant, moyennant l'addition supplémentaire d'eau pour régler la viscosité souhaitée du vernis, **caractérisé en ce que** de l'eau, une résine solide ou une solution de résine, des agents antimoussants et des agents de neutralisation sont mis à disposition pour la réalisation de la solution de la résine et sont ajoutés pendant un processus de solution exotherme de la résine, de telle sorte que la valeur du pH ne se situe pas en dessous de pH 9 au début et la valeur du pH est maintenue entre pH 8 et 10 pendant le brassage par un ajout correspondant d'une dose d'agent de neutralisation.

2. Procédé de fabrication selon la revendication 1, **caractérisé en ce que** la température est maintenue entre 20°C et 80°C.

3. Vernis, comportant une résine à base de collophonium modifié ou une gomme-laque et une dispersion aqueuse d'un copolymère à base de gomme-laque et/ou une dispersion aqueuse à base d'acide polylactique et/ou une dispersion aqueuse à base de cellulose, ainsi que, le cas échéant, des agents mouillants, des agents antimoussants, de la cire, des solvants, des agents d'écoulement et des agents de matage, **caractérisé en ce que** la résine et la dispersion représentent conjointement plus de 25 % en poids, et **en ce que** le vernis comporte de l'eau, en plus des additifs supplémentaires précédents.

4. Vernis selon la revendication 3, **caractérisé en ce que** la résine à base de collophonium modifié et/ou la gomme-laque sont présentes dans une quantité inférieure à 50 % en poids.

5. Vernis selon la revendication 4, **caractérisé en ce que** la résine à base de collophenium modifié et/ou la gomme-laque sont une résine solide.

6. Vernis selon la revendication 5, **caractérisé en ce que** la résine solide présente un poids moléculaire entre 800 et 20 000.

7. Vernis selon la revendication 3, **caractérisé en ce que** la dispersion est présente dans une quantité inférieure à 95 % en poids.

8. Vernis selon la revendication 3, **caractérisé en ce que** la cire est au moins une cire naturelle présente dans une quantité de 1 à 25 % en poids.

9. Vernis selon la revendication 8, **caractérisé en ce que** la cire naturelle utilisée est une cire de carnauba et/ou une cire d'abeille et/ou une cire de candellila.

10. Vernis selon la revendication 3, **caractérisé en ce que** l'agent mouillant, à base de polyglycoside d'alkyle et/ou de lécithine de soja modifiée, est présent dans une quantité de 1 à 15 % en poids.

11. Vernis selon la revendication 3, **caractérisé en ce que** les agents antimoussants contenus dans le vernis sont des huiles natives et/ou des esters d'acides gras.

12. Vernis selon la revendication 3, **caractérisé en ce que** les agents d'écoulement contenus dans le vernis sont des glycols à base naturelle et/ou des alcools dans une quantité inférieure à 20 % en poids.

13. Vernis selon la revendication 3, **caractérisé en ce que** le vernis est un vernis brillant.

14. Vernis selon la revendication 3, **caractérisé en ce que** le vernis comporte des agents de matage.

15. Vernis selon la revendication 14, **caractérisé en ce que** les agents de maltage contenus dans le vernis sont des stéarates à base de matières premières à croissance postérieure et/ou des préparations de cire à base de cires amides.
